# EUROPEAN PATENT SPECIFICATION

(11) **EP 4 434 245 B1**
(45) Date of publication and mention of the grant of the patent: **01.07.2026**
(21) Application number: 22896115.7
(22) Date of filing: 17.11.2022
(51) Int. Cl.: H04W 12/03, H04W 12/041, H04W 12/069, H04W 4/80, H04W 28/06

(54) **METHOD AND SYSTEM FOR LINKED SECURE ADVERTISEMENT IN ULTRA WIDEBAND (UWB) SYSTEM**
VERFAHREN UND SYSTEM FÜR VERKNÜPFTE SICHERE WERBUNG IN EINEM ULTRABREITBANDSYSTEM
PROCÉDÉ ET SYSTÈME D'ANNONCE SÉCURISÉE LIÉE DANS UN SYSTÈME À BANDE ULTRALARGE (UWB)

(30) Priority: 17.11.2021 IN 202141052841; 18.11.2021 IN 202141053072; 08.11.2022 IN 202141052841
(43) Date of publication of application: 25.09.2024
(73) Proprietor: Samsung Electronics Co., Ltd., Suwon-si, Gyeonggi-do 16677 (KR)
(72) Inventor: GOPALAN, Karthik Srinivasa, Bangalore 560037 (IN); BANSAL, Ankur, Bangalore 560037 (IN); KABBINALE, Aniruddh Rao, Bangalore 560037 (IN)
(74) Representative: Nederlandsch Octrooibureau
(86) International application number: PCT/KR2022/018249
(87) International publication number: WO 2023/090918

(56) References cited:
- WO-A1-2021/112634
- US-A1- 2007 141 988
- US-A1- 2016 278 006
- US-A1- 2017 265 164
- US-A1- 2018 263 017
- US-A1- 2019 306 337
- US-A1- 2021 144 130
- US-A1- 2021 144 130
- US-B1- 10 785 647

## Description

### Technical Field

The present disclosure relates to an ultra wideband (UWB) system, and more particularly to a method and a system for linked secure advertisement in the UWB system.

### Background Art

In general, ultra wideband (UWB) technology is mostly accompanied by an Out-of-band (OOB) technology such as for example but not limited to Bluetooth low energy (BLE) and Wireless Fidelity (Wi-Fi) to setup the UWB and for data exchange related to application. For faster data exchange and scalability, an advertisement is preferred over connection oriented message exchange and UWB data is broadcasted as the advertisement. The advertisement includes but not limited to UWB regulatory information, UWB configuration, and UWB service information. Several entities and applications use BLE advertisement to setup the UWB connection, such as for example an indoor positioning system which shares sensitive information pertaining to map of entire building or locations of anchors, and an advertisement profile which shares sensitive information like links to control certain devices. In such cases, the advertisement is broadcasted over clear air, where sensitive UWB configuration and sensitive UWB service information are shared via advertisement.

In conventional methods and systems, advertisements are broadcasted and anybody can read the advertisement, which leads to several drawbacks. Spoofing of devices such as for example an anchor device spoofed in the positioning system occurs. Denial/disruption of service is possible. A random user/device can connect to the device/infra and use the services. Tracking of usage pattern, user and/or device is possible. Leakage of information such as for example but not limited to sensitive UWB related information, sensitive service related information, and sensitive infrastructure related information is possible. Further, sensitive device control information can be leaked, which leads to hacking of devices Conventional advertising techniques are disclosed in documents US 2017/265164 Al, US 2021/144130 Al, US 2016/278006 A1 and US 10 785 647 B1.

In some cases, the size of the data is too big to be broadcasted as one advertisement and/or transmission message, or multiple advertisement/transmission messages has to be transferred completely, for example but not limited to UWB configuration and UWB service information having the size larger than the size of advertisement has to be broadcasted completely. In such cases, fragmentation of data is required to share some of the data fields, as the size of the data in these fields is expected to be more than that can be transmitted in one advertisement/transmission.

Thus, it is desired to address the above mentioned disadvantages or other shortcomings or at least provide a useful alternative.

### Disclosure of Invention

### Technical Problem

The principal object of the embodiments herein is to provide a method and a system for linked secure advertisement in an ultra wideband (UWB) system. The method includes protecting the sensitive UWB information. The protection includes encryption and signing of the sensitive UWB information. Encryption and signing are used in combination or independently based on the need to maintain the data private or verify the authenticity of the data. Different parts of the advertisement are encrypted/signed separately using different keys, thereby allowing various service providers to independently protect the respective information.

Another object of the embodiments herein is to provide a method and an UWB system for fragmenting UWB advertisement data and linking those fragments. The proposed invention fragments the data to be broadcasted into multiple fragments, and linking those fragments where each fragment is prefixed with a fragmentation data header to broadcast the data completely. The linked fragments of the data are broadcasted or advertised independently in separate advertisement or the fragments of the data are clubbed together and broadcasted in one advertisement.

Therefore, the proposed invention ensures privacy and enhances security of the sensitive UWB information of the UWB data. Further, the proposed invention also fragments the data to be broadcasted into multiple fragments to broadcast the data completely.

### Solution to Problem

Accordingly the embodiments herein disclose a method for linked secure advertisement in an ultra-wideband (UWB) system. The method includes receiving UWB data to be broadcasted as advertisement, and classifying the UWB data to be broadcasted into sensitive UWB information and non-sensitive UWB information. The method also includes protecting the sensitive UWB information. Further, the method includes generating the secure advertisement comprising at least one of the non-sensitive UWB information and the protected-sensitive UWB information, and broadcasting the secure advertisement.

In an embodiment, the non-sensitive UWB information includes but not limited to UWB regulatory information and UWB vendor information. The sensitive UWB information includes but not limited to UWB configuration information and UWB service information.

In an embodiment, the sensitive UWB information is protected by setting, by the UWB system, an encryption flag indicating if the sensitive UWB information is encrypted or not in a protected field format; generating, by the UWB system, an encryption key for encrypting the sensitive UWB information if the sensitive UWB information is not encrypted; and encrypting, by the UWB system, the sensitive UWB information using the encryption key for maintaining privacy of the sensitive UWB information.

In an embodiment, the sensitive UWB information is protected by setting, by the UWB system, a signature flag indicating if the sensitive UWB information is signed or not in the protected field format; generating, by the UWB system, a signature key for signing the sensitive UWB information, if the sensitive UWB information is not signed; and signing, by the UWB system, the sensitive UWB information for verifying authenticity of the sensitive UWB information.

In an embodiment, the protected field format includes but not limited to an advertisement type, a data length, a protected field header, reserved for future use (RFU), the encrypted or non-encrypted data and a signature.

In an embodiment, the protected field header includes but not limited to the encryption flag, the signature flag, a reserved data, a cipher suite, a public key/certificate comprising an inline public key/certificate for encrypting/signing data/payload and a public key/certificate uniform resource identifier (URI) for fetching the public key/ certificate, a nounce/random number for encrypting/signing data, an initialization vector for encrypting/signing data and a timestamp to reduce replay attack possibilities.

Accordingly the embodiments herein disclose a method for fragmenting and linking the UWB advertisement data in the UWB system. The method includes receiving, by the UWB system, the UWB advertisement data from at least one first device, and fragmenting and linking, by the UWB system, the UWB advertisement data into multiple linked fragments. The method also includes determining the fragments including same UWB data and the fragments including unique UWB data from the multiple fragments, grouping the fragments including the same UWB data into a single group, and generating the UWB advertisement to be broadcasted by appending the fragments including the unique UWB data with the single group of fragments including the same UWB data.

In an embodiment, the UWB advertisement data is fragmented into multiple fragments by obtaining, by the UWB system, the UWB advertisement data from at least one first device; determining, by the UWB system, a size of the UWB advertisement data is greater than a maximum fragment size; determining, by the UWB system, a number of fragment based on a size of the UWB advertisement; and fragmenting, by the UWB system, the UWB advertisement data into multiple fragments based on the number of fragments.

In an embodiment, the fragments including the same UWB data are grouped into the single group by assigning a same fragment group identifier (ID), and wherein a new fragment group ID is assigned when fragmenting new UWB advertisement data into multiple fragments.

In an embodiment, each fragment of the multiple fragments of the UWB advertisement data is split into a plurality of fields in at least one fragmentation field format comprising a fragmentation data header and a fragmentation data payload.

In an embodiment, the fragmentation data header of one of the fragmentation field formats includes but not limited to at least one of reserved for future use (RFU), the fragment group ID identifying the group of fragments, a first fragment flag indicating a first fragment of the multiple fragments, and fragment information indicating the number of fragments and a fragment index.

In an embodiment, the fragmentation data header of another fragmentation field format comprises includes but not limited to the RFU, the fragment group ID identifying the group of fragments and a fragment offset indicating an offset of the multiple fragments in the UWB advertisement data.

In an embodiment, the fragmentation data payload includes multiple fragments of the UWB advertisement data.

In an embodiment, the fragments including the unique UWB data is appended with the single group of fragments including the same UWB data by creating, by the UWB system, the fragmentation data header for each of the fragments comprising the unique UWB data; creating, by the UWB system, the fragmentation data header for the single group of fragments comprising the same UWB data; and appending, by the UWB system, the fragments comprising the unique UWB data with the single group of fragments comprising the same UWB data based on the fragmentation data header.

In an embodiment, the fragmentation data header is created for each fragment of the multiple fragments by determining, by the UWB system, whether a fragment flag is set; and performing, by the UWB system, one of: determining, by the UWB system, the fragment group ID is equal to the new fragment group ID, and the UWB data in the fragment is equal to the number of fragments in response to setting the fragment flag, and determining, by the UWB system, the UWB data in the fragment is equal to the fragment index indicating the index of the current fragment in response to not setting the fragment flag.

In an embodiment, the method further includes simultaneouslybroadcasting, by the UWB system, the multiple fragments of UWB advertisement data to at least one second device in one of: a single advertisement by clubbing the multiple fragments of the UWB advertisement data, or independently in separate advertisements each of which comprises at least one fragment of the multiple fragments of the UWB advertisement data.

Accordingly the embodiments herein disclose a system for linked secure advertisement in an ultra-wideband (UWB) system. The system includes a memory, a processor coupled to the memory, a communicator coupled to the memory and the processor, and an UWB advertiser coupled to the memory, the processor and the communicator. The UWB advertiser is configured to receive UWB data to be broadcasted as advertisement, classify the UWB data to be broadcasted into sensitive UWB information and non-sensitive UWB information, protect the sensitive UWB information, generate the secure advertisement including at least one of the non-sensitive UWB information and the protected-sensitive UWB information, and broadcast the secure advertisement.

Accordingly the embodiments herein disclose an ultra-wideband (UWB) system for fragmenting UWB advertisement data. The UWB system includes a memory, a processor coupled to the memory, a communicator coupled to the memory and the processor, and a fragmentation module coupled to the memory, the processor and the communicator. The fragmentation module is configured to receive the UWB advertisement data from at least one first device, fragment the UWB advertisement data into multiple fragments, determine the fragments comprising same UWB data and the fragments comprising unique UWB data from the multiple fragments, group the fragments comprising the same UWB data into a single group, generate the UWB advertisement to be broadcasted by appending the fragments including the unique UWB data with the single group of fragments including the same UWB data.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the invention thereof, and the embodiments herein include all such modifications.

### Brief Description of Drawings

This invention is illustrated in the accompanying drawings, throughout which like reference letters indicate corresponding parts in the various figures. The embodiments herein will be better understood from the following description with reference to the drawings, in which:
FIG. 1 is a block diagram of a system for linked secure advertisement in an UWB system, according to the embodiments as disclosed herein;
FIG. 2 is a flow chart illustrating a method for linked secure advertisement in the UWB system, according to the embodiments as disclosed herein;
FIG. 3 is an example of an advertisement in the UWB system comprising non-sensitive UWB information and sensitive UWB information, according to the embodiments as disclosed herein;
FIG. 4 is an example illustrating protection of multiple service data using different keys, according to the embodiments as disclosed herein;
FIG. 5 is a schematic view illustrating a protected field format, according to the embodiments as disclosed herein;
FIG. 6 is a flow chart illustrating a method for fragmenting UWB advertisement data in the UWB system, according to the embodiments as disclosed herein;
FIG. 7 is a block diagram of the fragmentation module of the UWB system, according to the embodiments as disclosed herein;
FIG. 8A and 8B are the schematic views illustrating the fragmentation field formats, according to the embodiments as disclosed herein;
FIG. 9 is an example illustrating multiple fragments of the UWB advertisement data, according to the embodiments as disclosed herein; and
FIG. 10 is a schematic view illustrating the fragmentation of the UWB advertisement data of multiple services, according to the embodiments as disclosed herein.
FIG. 11 illustrates an electronic device according to an embodiment.

### Mode for the Invention

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

Accordingly the embodiments herein disclose a method for linked secure advertisement in an ultra-wideband (UWB) system. The method includes receiving UWB data to be broadcasted as advertisement and classifying the UWB data to be broadcasted into sensitive UWB information and non-sensitive UWB information. Further, the method includes protecting the sensitive UWB information, generating the secure advertisement comprises the non-sensitive UWB information and the protected-sensitive UWB information, and broadcasting the secure advertisement.

Accordingly the embodiments herein disclose a system for linked secure advertisement in the UWB system. The system includes a memory, a processor coupled to the memory, a communicator coupled to the memory and the processor, and an UWB advertiser coupled to the memory, the processor and the communicator. The UWB advertiser is configured to receive UWB data to be broadcasted as advertisement, classify the UWB data to be broadcasted into sensitive UWB information and non-sensitive UWB information, protect the sensitive UWB information, generate the secure advertisement comprises the non-sensitive UWB information and the encrypted-sensitive UWB information, and broadcast the secure advertisement.

Accordingly the embodiments herein disclose a method for fragmenting UWB advertisement data in an UWB system. The method includes receiving, by the UWB system, the UWB advertisement data, and fragmenting, by the UWB system, the UWB advertisement data into multiple fragments. The method also includes determining the fragments comprising same UWB data and the fragments comprising unique UWB data from the multiple fragments. Further, the method includes grouping the fragments comprising the same UWB data into a single group, and generating the UWB advertisement to be broadcasted by appending the fragments comprising the unique UWB data with the single group of fragments comprising the same UWB data.

Accordingly the embodiments herein disclose an UWB system for fragmenting UWB advertisement data. The UWB system includes a memory, a processor coupled to the memory, a communicator coupled to the memory and the processor, and a fragmentation module coupled to the memory, the processor and the communicator. The fragmentation module is configured to receive the UWB advertisement data, fragment the UWB advertisement data into multiple fragments, determine the fragments comprising same UWB data and the fragments comprising unique UWB data from the multiple fragments, group the fragments comprising the same UWB data into a single group, and generate the UWB advertisement to be broadcasted by appending the fragments comprising the unique UWB data with the single group of fragments comprising the same UWB data.

The conventional methods and systemsbroadcastthe advertisement normally and any random user/device can read the advertisement, leading to more ground for attackers to attack in the UWB. Two or more devices can be spoofed during advertisement, such as for example an anchor device can be spoofed in the positioning systems during normal advertisement. Further, in conventional methods and system, denial/disruption of service is possible. Any random user/device can connect to the device/infrastructure and use the services easily. During normal advertisement, tracking of user/device is feasible. Also, the sensitive UWB configuration information, the sensitive service related information, the sensitive infrastructure related information, the sensitive device control information can be leaked, which leads to hacking of devices.

Unlike the conventional methods and systems, in the proposed method, the UWB data to be broadcasted is classified into the sensitive UWB information and the non-sensitive UWB information. The sensitive UWB information is encrypted and/or signed using different keys/credentials. Therefore, only the limited devices/users possess the key/credentials to have access to the sensitive UWB information available in the advertisement. The proposed method performs encryption and signing in combination or performs encryption and signing independently based on the need to maintain privacy of the sensitive information or to verify an authenticity of the information. Further, the users of a particular application/service have the key to decrypt the sensitive UWB configuration and service information and proceed to use the UWB service in secured manner.

Furthermore, the conventional methods and systemsbroadcast the advertisement as a whole, leading to loss of information from the advertisement as the size of the advertisement is limited. Theconventional methods and systems share data to be broadcasted as advertisement by reducing the size of the data, when the size of the data is too big to be broadcasted as one advertisement and/or transmission message, or multiple advertisement/transmission messages has to be transferred completely. For example, the UWB configuration and the UWB service information having size larger than the size of advertisement has to be broadcasted completely. However, the conventional system does not perform fragmentation of data to share some of the data fields, as the size of the data in these fields is expected to be more than that can be transmitted in one advertisement/transmission.

Unlike to the conventional methods and system, in the proposed method, the UWB data to be broadcasted is fragmented into the multiple fragments, when the size of the UWB data is too big to be broadcasted as one advertisement/transmission message. Thereby, broadcasting the UWB data having for example but not limited to the UWB configuration and the UWB service information with the size larger than the size of advertisement completely and in a secured manner.

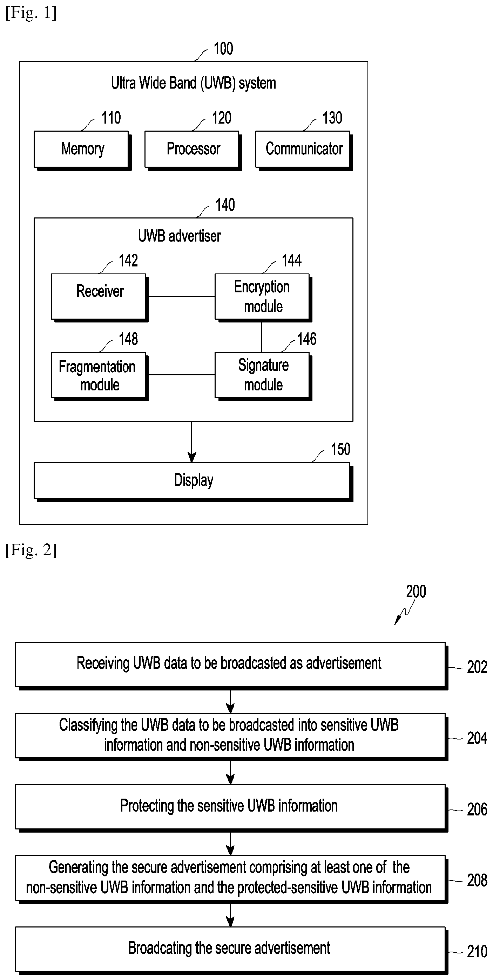

Referring now to the drawings and more particularly to FIGS. 1through 10, where similar reference characters denote corresponding features consistently throughout the figure, these are shown preferred embodiments.

FIG. 1 is a block diagram of the UWB system (100) for linked secure advertisement, according to the embodiments as disclosed herein. Referring to the FIG. 1, the UWB system (100) may be but not limited to a laptop, a palmtop, a desktop, a mobile phone, a smart phone, Personal Digital Assistant (PDA), a tablet, a wearable device, an Internet of Things (IoT) device, a virtual reality device, a foldable device, a flexible device, a display device and an immersive system.

In an embodiment, theUWB system (100) includes a memory (110), a processor (120), a communicator (130), aUWB advertiser (140) and a display (150).

The memory (110) is configured to store the UWB data to be broadcasted. The memory (110) can include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory (110) may, in some examples, be considered a non-transitory storage medium. The term "non-transitory" may indicate that the storage medium is not embodied in a carrier wave or a propagated signal. However, the term "non-transitory" should not be interpreted that the memory (110) is non-movable. In some examples, the memory (110) is configured to store larger amounts of information. In certain examples, a non-transitory storage medium may store data that can, over time, change (e.g., in Random Access Memory (RAM)).

The processor (120) may include one or a plurality of processors to perform protection of the sensitive UWB information and fragmentation of the UWB advertisement data into multiple fragments during secure advertisement. The one or the plurality of processors may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The processor (120) may include multiple cores and is configured to execute the instructions stored in the memory (110).

In an embodiment, the communicator (130) includes an electronic circuit specific to a standard that enables wired or wireless communication. The communicator (130) is configured to communicate internally between internal hardware components of the UWB system(100) and with external devices via one or more networks.

In an embodiment, the UWB advertiser (140) includes a receiver (142), an encryption module (144), a signing module (146) and a fragmentation module (148).

In an embodiment, the receiver (142) is configured to receive the UWB data to be broadcasted as advertisement from the users and/or external device. The UWB data to be broadcasted includes the sensitive UWB information and the non-sensitive UWB information. The non-sensitive UWB information includes but not limited to the UWB regulatory information and the UWB vendor information. The sensitive UWB information includes but not limited to the UWB configuration information and the UWB service information.

In an embodiment, the encryption module (144) is configured for encrypting the sensitive UWB information of the UWB data. The sensitive information includes but not limited to the UWB configuration information and the UWB service information. The encryption module (144) encrypts the sensitive UWB information by setting an encryption flag indicating if the sensitive UWB information is encrypted or not in a protected field format. An encryption key is generated for encrypting the sensitive UWB information if the sensitive UWB information is not encrypted. The encryption key is generated by providing an application identifier (ID), a service ID, a device ID and/or a vendor ID in combination or separately as an input to the encryption module (144). The sensitive UWB information is encrypted for maintaining privacy of the sensitive UWB information.

In an embodiment, the signing module (146) is configured for signing the sensitive UWB information of the UWB data. The sensitive UWB information of the UWB data is signed by setting a signature flag indicating if the sensitive UWB information is signed or not in the protected field format. The signature key is generated for signing the sensitive UWB information, if the sensitive UWB information is not signed. The signature key is generated by providing the application ID, the service ID and/or the vendor ID in combination or separately as the input to the signing module (146). The sensitive UWB information is signed for verifying authenticity of the user/device.

In an embodiment, the fragmentation module (148) is configured to fragment the UWBadvertisement data into multiple fragments. The UWBadvertisement data is fragmented into multiple fragments, by determining that a size of the UWB advertisement data is greater than a maximum fragment size, by determining a number of fragment based on a size of the UWB advertisement, and by fragmenting the UWB advertisement data into multiple fragments based on the number of fragments.

The fragments including the same UWB data are grouped into a single group by assigning a same fragment group identifier (ID). A new fragment group ID is assigned when new UWB advertisement data is fragmented into multiple fragments. If same information is advertised again (e.g. periodic repetition of advertisement), the fragment group ID for same group of fragments shall not change.

Each fragment of the multiple fragments of the UWB advertisement data is split into a plurality of fields in at least one fragmentation field format. The fragmentation field format includes a fragmentation data header and a fragmentation data payload. Each filed of the fragment is added with the fragmentation data header, and each field is fragmented separately.

The UWB advertiser (140)is implemented by processing circuitry such as logic gates, integrated circuits, microprocessors, microcontrollers, memory circuits, passive electronic components, active electronic components, optical components, hardwired circuits, or the like, and may optionally be driven by firmware. The circuits may, for example, be embodied in one or more semiconductor chips, or on substrate supports such as printed circuit boards and the like.

At least one of the plurality of modules/ components of the UWB advertiser (140) may be implemented through an AI model. A function associated with the AI model may be performed through memory (110) and the processor (120). The one or a plurality of processors controls the processing of the input data in accordance with a predefined operating rule or the AI model stored in the non-volatile memory and the volatile memory. The predefined operating rule or artificial intelligence model is provided through training or learning.

Here, being provided through learning means that, by applying a learning process to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning process is a method for training a predetermined target device (for example, a robot) using a plurality of learning data to cause, allow, or control the target device to make a determination or prediction. Examples of learning processes include, but are not limited to, supervised learning, unsupervised learning, semi-supervised learning, or reinforcement learning.

In an embodiment, the display (150) is configured to display the secure advertisement.The display (150) is implemented using touch sensitive technology and comprises one of liquid crystal display (LCD), light emitting diode (LED), etc.

Although the FIG. 1shows the hardware elements of the UWB system (100) but it is to be understood that other embodiments are not limited thereon. In other embodiments, the UWB system (100) may include less or more number of elements. Further, the labels or names of the elements are used only for illustrative purpose and does not limit the scope of the invention. One or more components can be combined together to perform same or substantially similar function.

FIG. 2 is a flow chart (200) illustrating a method for linked secure advertisement in the UWB system (100), according to the embodiments as disclosed herein.

Referring to the FIG. 2, at step 202, the method includes the UWB system (100) receiving the UWB data to be broadcasted as advertisement. For example, in the UWB system (100) as illustrated in the FIG. 1, the UWB advertiser (140) is configured to receive the UWB data to be broadcasted as advertisement.

At step 204, the method includes the UWB system (100) classifying the UWB data to be broadcasted into the sensitive UWB information and the non-sensitive UWB information. For example, in the UWB system (100) as illustrated in the FIG. 1, the UWB advertiser (140) is configured to classify the UWB data to be broadcasted into the sensitive UWB information and the non-sensitive UWB information.

At step 206, the method includes the UWB system (100) protecting the sensitive UWB information. For example, in the UWB system (100) as illustrated in the FIG. 1, the UWB advertiser (140)is configured to protect the sensitive UWB information.

At step 208, the method includes the UWB system (100) generating the secure advertisement comprising at least one of the non-sensitive UWB information and the protected-sensitive UWB information. For example, in the UWB system (100) as illustrated in the FIG. 1, the UWB advertiser (140)is configured to generate the secure advertisement comprising at least one of the non-sensitive UWB information and the protected-sensitive UWB information.

At step 210, the method includes the UWB system (100) broadcasting the secure advertisement. For example, in the UWB system (100) as illustrated in the FIG. 1, the UWB advertiser (140)is configured to broadcast the secure advertisement.

The various actions, acts, blocks, steps, or the like in the method may be performed in the order presented, in a different order or simultaneously. Further, in some embodiments, some of the actions, acts, blocks, steps, or the like may be omitted, added, modified, skipped, or the like without departing from the scope of the invention.

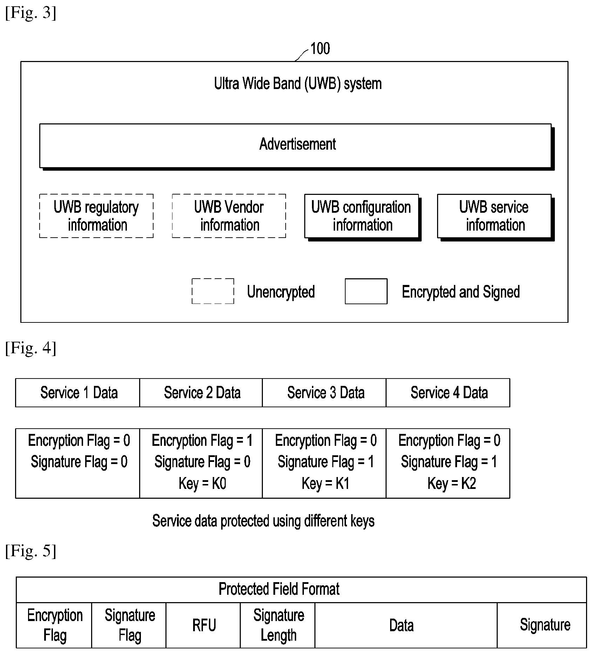

FIG. 3 is an example of the advertisement in the UWB system (100), according to the embodiments as disclosed herein.

Referring to the FIG. 3, the advertisement broadcasted in the UWB system (100) includes the non-sensitive UWB information and the sensitive UWB information. Different parts of the advertisement may be encrypted/signed separately using different keys.

In some cases, it is desirable to allow the UWB data to be read only by the authorized parties. To achieve security of the UWB data, the encryption module (144) of the UWB system (100) encrypts some portions of the UWB data such as for example the sensitive UWB information while some portions of the UWB data such as for example the non-sensitive UWB information or the basic UWB information remain un-encrypted. The portions of the UWB data with the sensitive UWB information are encrypted together or separately using the encryption keys. Standard symmetric encryption technique and asymmetric encryption technique are used for encryption of the sensitive UWB information to prevent generation of the advertisements by a random user.

Further, the signature module (146) of the UWB system (100) signs some portions of the UWB data such as for example the sensitive UWB information while some portion of the UWB data such as for example the non-sensitive UWB information remain unsigned. The portions of the UWB data with the sensitive UWB information are signed together or separately to provide authenticity of the UWB data. Standard signature techniques are used for signing the sensitive UWB information. A combination of encryption and signing is used for secure advertisement. Different portions of the UWB data are encrypted/signed together or encrypted/signed separately using separate keys for generating secure advertisement.

FIG. 4 is an example illustrating the protection of multiple service data using different keys, according to the embodiments as disclosed herein.

FIG. 4 illustrates that protection of the UWB data can be applied to certain fields of the advertisement only. Thus, some portions of the advertisement are protected while some portions of the advertisement are not protected. Different portions of the advertisement are encrypted/signed separately by setting different encryption/signature flags and by using different keys. Thereby, allowing various service providers to independently protect the respective information.

FIG. 5 is a schematic view illustrating a protected field format, according to the embodiments as disclosed herein.

Referring to FIG. 5, as the UWB data is broadcasted over a wireless technology, any random user/entity can spoof the information from the advertisement. Thereby, in order to provide authenticity for the UWB data, some portions of the UWB data are signed using signature keys. In some cases it is desirable to allow the UWB data to be read only by the authorized parties. In such cases, some portions of the UWB data are encrypted to provide security to the some portions of the UWB data. Encryption and signing may be used in combination or independently based on the need to maintain the data private or verify the authenticity of the UWB data.

Some portions of the UWB data information are signed and/or encrypted in a protected field format. The protected field format includes but not limited to an advertisement type, a data length, a protected field header, reserved data (RFU), a signature length, the encrypted or non-encrypted data and a signature. Table 1, Table 2 and Table 3 show an information element/packet format for protected/secure advertisement.

Table 1 show that the information element/packet format for protected/secure advertisement includes but not limited to the protected field header including the encryption flagindicating if the data is encrypted or not, the signature flagindicating if the data is signed or not, the reserved data and the cipher suite, data/payload, and the signature.

**[Table 1]**

| **Field Name** | **Size (bits)** | **Description** |
|---|---|---|
| Protected Field Header | 3 bytes | |
| > Encryption Flag | 1 | Indicates if Data is encrypted |
| > Signature Flag | 1 | Indicates if data is signed |
| > Reserved Data | 6 | |
| > Cipher Suite | 2 bytes | Indicates which encryption and signature algorithm is used. May use to TLS Cipher suite identifiers |
| Data / Payload | | Encrypted Data if "Encryption Flag" field in "Protected Field Header" is setElse Non-encrypted data |
| Signature | | If "Signature Flag" field in "Protected Field Header" is set |

Table 2 show that the information element/packet format for protected/secure advertisement includes but not limited to a type for identifying the UWB configuration, the data length, the protected field header including the encryption flagindicating if the data is encrypted or not, the signature flagindicating if the data is signed or not, RFU and the cipher suite, data, and the signature.

**[Table 2]**

| **Field Name** | **Size (bits)** | **Description** |
|---|---|---|
| Type | 4 bits | Identifier for UWB configuration |
| Length | 4 bits | Length of subsequent Data |
| Protected Field Header | 3 bytes | |
| > Encryption Flag | 1 bit | Indicates if Data is encrypted |
| > Signature Flag | 1 bit | Indicates if Data is signed |
| > RFU | 6 bits | |
| > Cipher Suite | 2 bytes | Indicates which encryption and signature algorithm is used. May use to TLS Cipher suite identifiers |
| Data | | Encrypted Data if "Encryption Flag" field in "Protected Field Header" is setElse Non-encrypted data |
| Signature | | If "Signature Flag" field in "Protected Field Header" is set |

Table 3 show that the information element/packet format for protected/secure advertisement includes but not limited to a type for identifying the advertisement, the data length, the protected field header including the encryption flagindicating if the data is encrypted or not, the signature flagindicating if the data is signed or not, the reserved data, the cipher suite, a public key/certificate, a nounce/random number for encrypting/ signing data, an initialization vector for encrypting/signing data and a timestamp to reduce replay attack possibilities, data, and the signature. The public key/certificate includes an inline public key/certificate for encrypting/signing data/payload and a public key/certificate uniform resource identifier (URI) for fetching the public key/ certificate.

**[Table 3]**

| **Field Name** | **Size** | **Description** |
|---|---|---|
| Type | 4/8 bits | Identifier for Advertisement Type |
| Length | 4/8/16/32 bits | Length of subsequent Data |
| Protected Field Header | 3 bytes | |
| > Encryption Flag | 1 bit | Indicates if Data is encrypted |
| > Signature Flag | 1 bit | Indicates if Data is signed |
| > Reserved | 6 bits | |
| > Cipher Suite | 2 bytes | Indicates which encryption and signature algorithm will be used.May use to TLS Cipher suite identifiers |
| > Public Key / Certificate | | Inline or URI/URL to the Public Key / Certificate |
| >> Inline Public Key / Certificate | Variable depending on Encryption / signing algorithm used | Public Key / Certificate used for encrypting/signing data / payload |
| >> Public Key / Certificate URI | Variable | URI/URI to fetch the Public Key/ Certificate used for encrypting/ signing data / payload |
| > Nounce / Random Number | 32 / 64 bits | Random number used for Nounce for encrypting/signing data / payload. |
| > IV | Variable depending on Encryption / signing algorithm used | Initialization Vector used for encrypting/signing data/payload. |
| > Timestamp | 32 / 64 bits | Timestamp to reduce replay attack possibilities. This field will be included while calculating the signature. |
| Data | | Encrypted Data if "Encryption Flag" field in "Protected Field Header" is setElse Non-encrypted data |
| Signature | | If "Signature Flag" field in "Protected Field Header" is set |

Table 4 shows the protected field format including but not limited to the encryption flagindicating if the data is encrypted or not, the signature flagindicating if the data is signed or not, RFU, the signature length, data, and the signature.

**[Table 4]**

| **Field Name** | **Size (bits)** | **Description** |
|---|---|---|
| Encryption Flag | 1 | Specifies if the data is encrypted or not0b0 = Not Encrypted0b1 = Encrypted |
| Signature Flag | 1 | Specifies if the data is signed or not0b0 = Not Signed0b1 = Signed |
| RFU | 6 | RFU |
| Signature Length | 8 | Length of Signature field in bytes. Present if "Signature Flag" field is set (i.e. 0b1). |
| Data | Variable | Encrypted Data if "Encryption Flag" field is set (i.e. 0b1)Non-encrypted data if "Encryption Flag" field not set (i.e. 0b0) |
| Signature | Variable | Present if "Signature Flag" field is set (i.e. 0b1) |

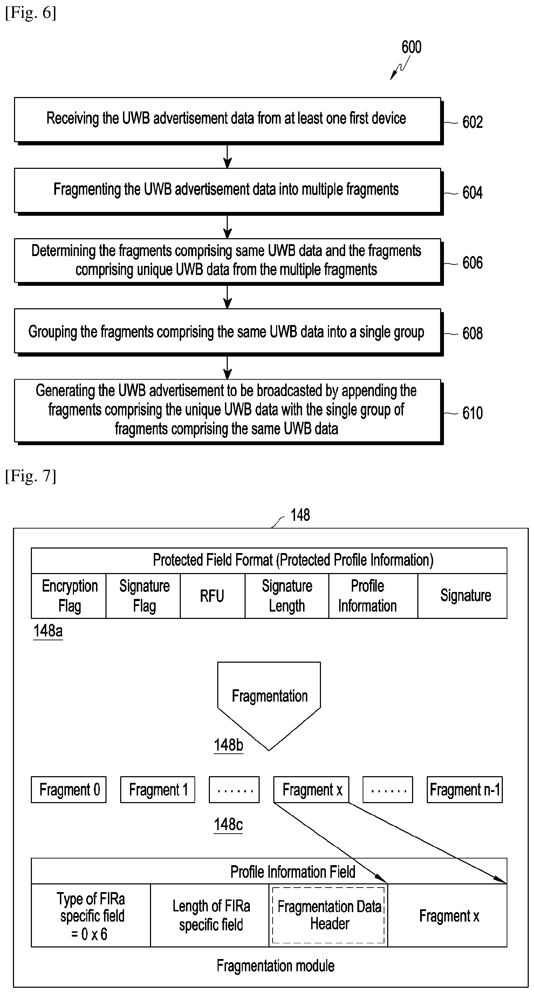

FIG. 6 is a flow chart illustrating a method for fragmenting UWB advertisement data in the UWB system, according to the embodiments as disclosed herein.

Referring to the FIG. 6, at step 602, the method includes the UWB system (100) receiving the UWB advertisement data from at least one first device. For example, in the UWB system (100) as illustrated in the FIG. 1, the UWB advertiser (140)is configured to receive the UWB advertisement data from at least one first device. The first device includes but not limited to the laptop, the palmtop, the desktop, the mobile phone, the smart phone, Personal Digital Assistant (PDA), the tablet, the wearable device, the Internet of Things (IoT) device, the virtual reality device, the foldable device, the flexible device, the display device and the immersive system.

At step 604, the method includes the UWB system (100) fragmenting the UWB advertisement data into multiple fragments. For example, in the UWB system (100) as illustrated in the FIG. 1, the UWB advertiser (140)is configured to fragment the UWB advertisement data into multiple fragments.

The UWB advertisement data is fragmented into multiple fragments by obtaining the UWB advertisement data from the first device, by determining that the size of the UWB advertisement data is greater than a maximum fragment size, and by determining a number of fragment based on a size of the UWB advertisement. The UWB advertisement data is fragmented into multiple fragments based on the number of fragments.

At step 606, the method includes the UWB system (100) determining the fragments comprising same UWB data and the fragments comprising unique UWB data from the multiple fragments. For example, in the UWB system (100) as illustrated in the FIG. 1, the UWB advertiser (140)is configured to determine the fragments comprising same UWB data and the fragments comprising unique UWB data from the multiple fragments.

At step 608, the method includes the UWB system (100) grouping the fragments comprising the same UWB data into a single group. For example, in the UWB system (100) as illustrated in the FIG. 1, the UWB advertiser (140)is configured to group the fragments comprising the same UWB data into the single group.

At step 610, the method includes the UWB system (100) generating the UWB advertisement to be broadcasted by appending the fragments comprising the unique UWB data with the single group of fragments comprising the same UWB data. For example, in the UWB system (100) as illustrated in the FIG. 1, the UWB advertiser (140)is configured to generate the UWB advertisement to be broadcasted by appending the fragments comprising the unique UWB data with the single group of fragments comprising the same UWB data.

The fragments including the unique UWB data is appended with the single group of fragments comprising the same UWB data by creating the fragmentation data header for each of the fragments including the unique UWB data, creating the fragmentation data header for the single group of fragments including the same UWB data, and appending the fragments including the unique UWB data with the single group of fragments including the same UWB data based on the fragmentation data header.

The fragmentation data header is created for each fragment of the multiple fragments by determining whether a fragment flag of the fragmentation data header is set. Further, the fragmentation data header is created by determining whether the fragment group ID is equal to the new fragment group ID, and the UWB data in the fragment is equal to the number of fragments in response to setting the fragment flag. Or, the fragmentation data header is created by determining that the UWB data in the fragment is equal to the fragment index indicating the index of the current fragment in response to not setting the fragment flag.

The various actions, acts, blocks, steps, or the like in the method may be performed in the order presented, in a different order or simultaneously. Further, in some embodiments, some of the actions, acts, blocks, steps, or the like may be omitted, added, modified, skipped, or the like without departing from the scope of the invention.

FIG. 7 is a block diagram of the fragmentation module (148) of the UWB system (100), according to the embodiments as disclosed herein.

Referring to the FIG. 7, at step 148a, the profile information of the UWB advertisement data is encapsulated in the protected field format as shown in Table 4. The protected field format comprises the encryption flag identifying if the UWB advertisement data is encrypted or not, a signature flag identifying if the UWB advertisement data is signed or not, the reserved data (RFU), a signature length, an encrypted or non-encrypted data, and a signature. At step 148b, the profile information in the protected field format is fragmented into multiple fragments in the fragmentation module (140). Fragmentation of data or information is performed to convey some of the advertisement fields, as data or information in these advertisement fields are expected to be more than that can be broadcasted in one advertisement. Thereby, fragmenting the UWB advertisement data in at least one of the fragmentation field formats. The fragmentation field format includes the fragmentation data header and the fragmented data payload. The fragmented data payload includes multiple fragments of the UWB advertisement data. At step 148c, each fragment of the multiple fragments is prefixed with the fragmentation data header.

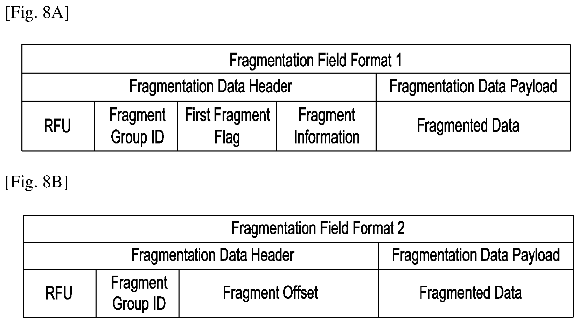

FIG. 8Aand 8B are the schematic views illustrating the fragmentation field formats, according to the embodiments as disclosed herein.

Referring to FIG. 8A, each fragment of the multiple fragments of the UWB advertisement data is split into a plurality of fields in at least one fragmentation field format. The first fragmentation field format includes the fragmentation data header and the fragmented data payload. The fragmented data payload includes multiple fragments of the UWB advertisement data. The fragmentation data header of the first fragmentation field format comprises the RFU, the fragment group ID identifying the group of fragments, a first fragment flag indicating a first fragment of the multiple fragments, and fragment information indicating the number of fragments and a fragment index. The first fragmentation field format is shown in Table 5.

**[Table 5]**

| **Field Name** | **Size (bits)** | **Description** |
|---|---|---|
| Fragmentation Data Header | | |
| RFU | 1 | |
| Fragment Group ID | 5 | Identifies the group of fragments. All fragments shall have the same Fragment Group ID.New Fragment Group ID shall be assigned when splitting new data into fragments. If same information is advertised again (e.g. periodic repetition of advertisement), the Fragment Group ID for same group of fragments shall not change. Fragmentation Group ID may not be transmitted if there is no fragmentation done. |
| First Fragment Flag | 1 | Specifies if it's the first fragment of the group.0b0 = not first fragment0b1 = first fragment |
| Fragment Information (Number of Fragments/ Fragment Index) | 4 | if (First Fragment Flag) is set, then this field shall specify (Number of Fragments)(Number of Fragments) is the total number of parts into which the payload has been split. If there is no fragmentation, (Number of Fragments) = 1. if (First Fragment Flag) is not set, then this field shall specify (Fragment Index).(Fragment Index) ranges from 0 to (Number of Fragments - 1).Fragment Index of First fragment is not specified explicitly. Its implicit by use of (First Fragment Flag) field. |

| Fragmentation Data Payload | | |
|---|---|---|
| Fragmented Data | Variable | Fragmented Data |

Referring to FIG. 8B, the fragmentation data header of the second fragmentation field format includes the RFU, the fragment group ID identifying the group of fragments and a fragment offset indicating an offset of the multiple fragments in the UWB advertisement data. Table 6 shows the second fragmentation field format.

**[Table 6]**

| **Field Name** | **Size (bits)** | **Description** |
|---|---|---|
| Fragmentation Data Header | | |
| RFU | 1 | |
| Fragment Group ID | 5 | Identifies the group of fragments. All fragments shall have the same Fragment Group ID.New Fragment Group ID shall be assigned when splitting new data into fragments. If same information is advertised again (e.g. periodic repetition of advertisement), the Fragment Group ID for same group of fragments shall not change. |
| Fragment Offset | 1 | Starting Offset of the fragment data in the complete data. |

| Fragmentation Data Payload | | |
|---|---|---|
| Fragmented Data | Variable | Fragmented Data |

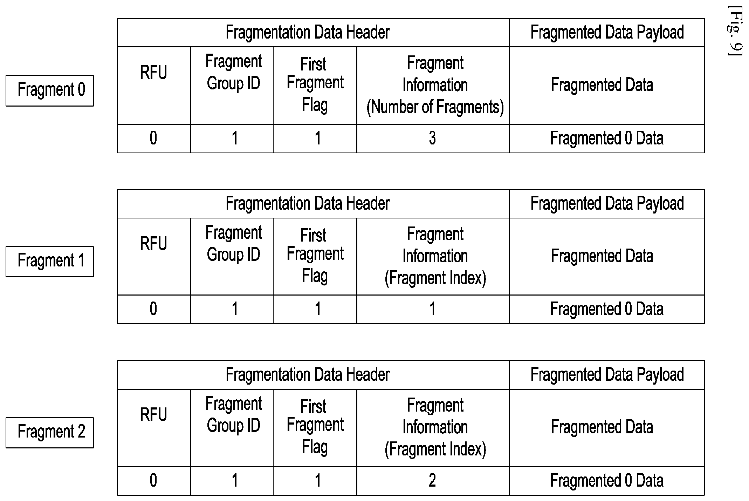

FIG. 9 is an example illustrating multiple fragments of the UWB advertisement data, according to the embodiments as disclosed herein.

Referring to FIG. 9, the UWB advertisement data is split into multiple fragments in the fragmentation field format. Each fragment of the multiple fragments includes the fragmentation data header and the fragmentation data payload as shown in Table 5 and Table 6. The fragments of the UWB data of multiple advertisement fields are broadcasted independently in separate advertisement packets or the fragments of the UWB data of multiple advertisement fields are clubbed together and broadcasted in one advertisement packet.

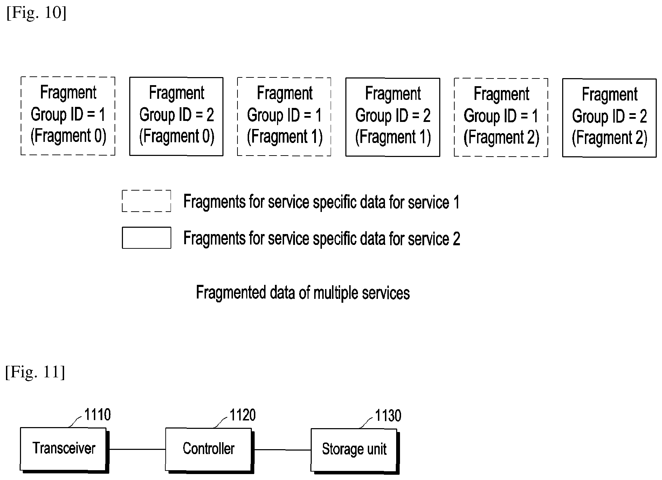

FIG. 10 is a schematic view illustrating the fragmentation of the UWB advertisement data of multiple services, according to the embodiments as disclosed herein.

FIG. 10 illustrates the advertisement of the fragmented data of multiple services. The UWB advertisement data to be broadcasted is fragmented into multiple fragments. The fragments including the same UWB data and the fragments including the unique UWB data are determined from the multiple fragments. The fragments including the same UWB data are grouped into the single group. The UWB advertisement to be broadcasted is generated by appending the fragments including the unique UWB data with the single group of fragments including the same UWB data. The proposed method also supports and broadcasts the fragmented data of multiple services simultaneously in an interleaved manner.

FIG. 11 illustrates an electronic device according to an embodiment. For example, the electronic device may be a UWB device.

Referring to FIG. 11, the electronic device includes a transceiver 1110, a controller 1120, and a storage unit 1130. The controller 1120 may be defined as a circuit, an ASIC, and/or at least one processor.

The transceiver 1110 may transmit and receive signals to/from another entity.

The controller 1120 may control the overall operation of the electronic device according to an embodiment. The controller 1120 may control inter-block signal flow to perform the operations according to the above-described flowchart. Specifically, the controller 1120 may control the operations (e.g., the operations of the application and/ or framework) of the electronic device described above with reference to FIGs. 1 to 10.

The storage unit 1130 may store at least one of information transmitted/received via the transceiver 1110 and information generated via the controller 1120. For example, the storage unit 1130 may store information and data necessary for the method described above with reference to FIGs. 1 to 10. The storage unit 1130 may include a memory device.

The foregoing description of the specific embodiments will so fully reveal the general nature of the embodiments herein that others can, by applying current knowledge, readily modify and or adapt for various applications such specific embodiments without departing from the generic concept, and, therefore, such adaptations and modifications should and are intended to be comprehended within the meaning of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A method for providing advertisement information by an ultra-wideband, UWB, device in a communication system, the method comprises:
obtaining service data for a UWB service;
identifying whether the service data includes information to be protected;
generating a protected service data by applying protection in case that the service data includes the information to be protected, wherein the information to be protected includes UWB configuration information or profile information associated with the UWB service, and the protected service data is encapsulated in a protected field format;
splitting the protected field format into a plurality of fragments in case that a size of the protected field format is expected to be more than a size that is transmitted in one advertisement packet; and
transmitting the plurality of fragments independently in separate advertisement packets,
wherein the protected field format includes an encryption flag indicating whether the protected service data is encrypted or not, and a signature flag indicating whether the protected service data is signed or not,
wherein in case that the signature flag indicates the service data is signed, the protected field format includes a signature length information indicating a length of a signature, and
wherein a fragmentation data header including a fragment group ID, a number of fragments and a fragment index are added to each fragment of the plurality of fragments.

2. The method of claim 1, wherein the protected service data is encrypted in case that the encryption flag indicates "1", and
wherein the protected service data is not encrypted in case that the encryption flag indicates "0".

3. The method of claim 2, wherein the protected service data is signed in case that the signature flag indicates "1", and
wherein the protected service data is not signed in case that the signature flag indicates "0".

4. The method of claim 1, further comprising grouping fragments including same service data among the plurality of fragments into a group having a same fragment group identifier ID.

5. The method of claim 4, wherein a new fragment group ID is assigned when splitting new service data into the plurality of fragments.

6. An ultra-wideband, UWB, device in a communication system, the UWB device comprises:
a communicator; and
a processor configured to:
obtain service data for a UWB service,
identify whether the service data includes information to be protected,
generate a protected service data by applying protection in case that the service data includes the information to be protected, wherein the information to be protected includes UWB configuration information or profile information associated with the UWB service, and the protected service data is encapsulated in a protected field format,
split the protected field format into a plurality of fragments in case that a size of the protected field format is expected to be more than a size that is transmitted in one advertisement packet; and
transmit the plurality of fragments independently in separate advertisement packets ,
wherein the protected field format includes an encryption flag indicating whether the protected service data is encrypted or not, and a signature flag indicating whether the protected service data is signed or not,
wherein in case that the signature flag indicates the service data is signed, the protected field format includes a signature length information indicating a length of a signature, and
wherein a fragmentation data header including a fragment group ID, a number of fragments and a fragment index are added to each fragment of the plurality of fragments.

7. The UWB device of claim 6 adapted to operate according to one of claim 2 to claim 5.

## Patentansprüche

1. Verfahren zur Bereitstellung von Werbeinformationen durch eine Ultrabreitband(UWB)-Vorrichtung in einem Kommunikationssystem, wobei das Verfahren Folgendes umfasst:
Erhalten von Dienstdaten für einen UWB-Dienst;
Identifizieren, ob die Dienstdaten Informationen enthalten, die zu schützen sind;
Erzeugen geschützter Dienstdaten durch Anwenden des Schutzes, falls die Dienstdaten die zu schützenden Informationen enthalten, wobei die zu schützenden Informationen UWB-Konfigurationsinformationen oder Profilinformationen enthalten, die mit dem UWB-Dienst assoziiert sind, und die geschützten Dienstdaten in einem geschützten Feldformat gekapselt sind;
Aufteilen des geschützten Feldformats in eine Vielzahl von Fragmenten, falls eine Größe des geschützten Feldformats voraussichtlich größer als eine in einem Werbepaket übertragene Größe ist; und
Übertragen der Vielzahl von Fragmenten unabhängig voneinander in separaten Werbepaketen,
wobei das geschützte Feldformat ein Verschlüsselungsflag, das anzeigt, ob die geschützten Dienstdaten verschlüsselt sind oder nicht, und ein Signaturflag enthält, das anzeigt, ob die geschützten Dienstdaten signiert sind oder nicht,
wobei, falls das Signaturflag anzeigt, dass die Dienstdaten signiert sind, das geschützte Feldformat Signaturlängeninformationen enthält, die eine Länge einer Signatur anzeigen, und
wobei jedem Fragment der Vielzahl von Fragmenten ein Fragmentdaten-Header hinzugefügt wird, der eine Fragmentgruppen-ID, eine Anzahl von Fragmenten und einen Fragmentindex enthält.

2. Verfahren nach Anspruch 1, wobei die geschützten Dienstdaten verschlüsselt sind, falls das Verschlüsselungsflag "1" anzeigt, und
wobei die geschützten Dienstdaten nicht verschlüsselt sind, falls das Verschlüsselungsflag "0" anzeigt.

3. Verfahren nach Anspruch 2, wobei die geschützten Dienstdaten signiert sind, falls das Signaturflag "1" anzeigt, und
wobei die geschützten Dienstdaten nicht signiert sind, falls das Signaturflag "0" anzeigt.

4. Verfahren nach Anspruch 1, das ferner das Gruppieren von Fragmenten, die dieselben Dienstdaten enthalten, aus der Vielzahl von Fragmenten in eine Gruppe mit derselben Fragmentgruppenkennung, ID, umfasst.

5. Verfahren nach Anspruch 4, wobei eine neue Fragmentgruppen-ID zugewiesen wird, wenn neue Dienstdaten in die Vielzahl von Fragmenten aufgeteilt werden.

6. Ultrabreitband(UWB)-Vorrichtung in einem Kommunikationssystem, wobei die UWB-Vorrichtung Folgendes umfasst:
einen Kommunikator; und
einen Prozessor, der zu Folgendem konfiguriert ist:
Erhalten von Dienstdaten für einen UWB-Dienst,
Identifizieren, ob die Dienstdaten Informationen enthalten, die zu schützen sind,
Erzeugen geschützter Dienstdaten durch Anwenden des Schutzes, falls die Dienstdaten die zu schützenden Informationen enthalten, wobei die zu schützenden Informationen UWB-Konfigurationsinformationen oder Profilinformationen enthalten, die mit dem UWB-Dienst assoziiert sind, und die geschützten Dienstdaten in einem geschützten Feldformat gekapselt sind,
Aufteilen des geschützten Feldformats in eine Vielzahl von Fragmenten, falls eine Größe des geschützten Feldformats voraussichtlich größer als die in einem Werbepaket übertragene Größe ist; und
Übertragen der Vielzahl von Fragmenten unabhängig voneinander in separaten Werbepaketen,
wobei das geschützte Feldformat ein Verschlüsselungsflag, das anzeigt, ob die geschützten Dienstdaten verschlüsselt sind oder nicht, und ein Signaturflag enthält, das anzeigt, ob die geschützten Dienstdaten signiert sind oder nicht,
wobei, falls das Signaturflag anzeigt, dass die Dienstdaten signiert sind, das geschützte Feldformat Signaturlängeninformationen enthält, die eine Länge einer Signatur anzeigen, und
wobei jedem Fragment der Vielzahl von Fragmenten ein Fragmentdaten-Header hinzugefügt wird, der eine Fragmentgruppen-ID, eine Anzahl von Fragmenten und einen Fragmentindex enthält.

7. UWB-Vorrichtung nach Anspruch 6, die für den Betrieb nach einem der Ansprüche 2 bis 5 angepasst ist.

## Revendications

1. Procédé pour fournir des informations publicitaires par un dispositif à bande ultra-large, UWB, dans un système de communication, le procédé comprenant :
obtenir des données de service pour un service UWB ;
identifier si les données de service incluent des informations à protéger ;
générer des données de service protégées en appliquant une protection dans le cas où les données de service incluent les informations à protéger, où les informations à protéger incluent des informations de configuration UWB ou des informations de profil associées au service UWB, et les données de service protégées sont encapsulées dans un format de champ protégé ;
diviser le format de champ protégé en une pluralité de fragments dans le cas où une taille du format de champ protégé devrait être supérieure à une taille transmise dans un seul paquet publicitaire ; et
transmettre la pluralité de fragments indépendamment dans des paquets publicitaires séparés,
où le format de champ protégé inclut un indicateur de chiffrement indiquant si les données de service protégées sont chiffrées ou non, et un indicateur de signature indiquant si les données de service protégées sont signées ou non,
où dans le cas où l'indicateur de signature indique que les données de service sont signées, le format de champ protégé inclut une information sur la longueur de signature indiquant une longueur d'une signature, et
où un en-tête de données de fragmentation incluant un ID de groupe de fragments, un nombre de fragments et un indice de fragment sont ajoutés à chaque fragment de la pluralité de fragments.

2. Procédé selon la revendication 1, où les données de service protégées sont chiffrées dans le cas où l'indicateur de chiffrement indique « 1 », et
où les données de service protégées ne sont pas chiffrées dans le cas où l'indicateur de chiffrement indique « 0 ».

3. Procédé selon la revendication 2, où les données de service protégées sont signées dans le cas où l'indicateur de signature indique « 1 » et
où les données de service protégées ne sont pas signées dans le cas où l'indicateur de signature indique « 0 ».

4. Procédé selon la revendication 1, comprenant en outre regrouper des fragments incluant les mêmes données de service parmi la pluralité de fragments dans un groupe ayant un même identifiant, ID, de groupe de fragments.

5. Procédé selon la revendication 4, où un nouvel ID de groupe de fragments est assigné lorsque de nouvelles données de service sont divisées dans la pluralité de fragments.

6. Dispositif à bande ultra-large, UWB, dans un système de communication, le dispositif UWB comprenant :
un communicateur ; et
un processeur configuré pour :
obtenir des données de service pour un service UWB,
identifier si les données de service incluent des informations à protéger,
générer des données de service protégées en appliquant une protection dans le cas où les données de service incluent les informations à protéger, où les informations à protéger incluent des informations de configuration UWB ou des informations de profil associées au service UWB, et les données de service protégées sont encapsulées dans un format de champ protégé,
diviser le format de champ protégé en une pluralité de fragments dans le cas où une taille du format de champ protégé devrait être supérieure à une taille transmise dans un seul paquet publicitaire ; et
transmettre la pluralité de fragments indépendamment dans des paquets publicitaires séparés,
où le format de champ protégé inclut un indicateur de chiffrement indiquant si les données de service protégées sont chiffrées ou non, et un indicateur de signature indiquant si les données de service protégées sont signées ou non,
où dans le cas où l'indicateur de signature indique que les données de service sont signées, le format de champ protégé inclut une information sur la longueur de signature indiquant une longueur d'une signature, et
où un en-tête de données de fragmentation incluant un ID de groupe de fragments, un nombre de fragments et un indice de fragment sont ajoutés à chaque fragment de la pluralité de fragments.

7. Dispositif UWB selon la revendication 6 adapté pour fonctionner selon l'une des revendications 2 à 5.
